# EUROPÄISCHE PATENTANMELDUNG

(11) **EP 4 030 150 A1**
(43) Veröffentlichungstag der Anmeldung: **20.07.2022**
(21) Anmeldenummer: 21020011.9
(22) Anmeldetag: 13.01.2021
(51) Int. Cl.: G01F 1/84, G01F 15/00, B67D 7/08, B67D 7/32

(54) **SYSTEM UND VERFAHREN ZUM ERMITTELN EINER VON EINEM FLUSS EINES MEDIUMS ABHÄNGIGEN GROSSE**

(71) Anmelder: Linde GmbH, 82049 Pullach (DE)
(72) Erfinder: Dorner, Sascha, A-2440 Gramatneusiedl (AT); Fahrner, Daniel, 2880 Kirchberg (AT); Vidic, Karl Jojo, A-1070 Wien (AT)
(74) Vertreter: Fischer, Werner

(57) **Zusammenfassung**

Die Erfindung betrifft ein System (100) zum Ermitteln einer von einem Fluss eines Mediums (M) abhängigen Größe, mit einem Durchflussmesser (110), der dazu eingerichtet ist, ein primäres Signal (S1) in Abhängigkeit von einem aktuellen Durchfluss des Mediums (M), das durch den Durchflussmesser (110) hindurchfließt, auszugeben, mit einem Messwandler (120), der dazu eingerichtet ist, das vom Durchflussmesser (110) ausgegebene primäre Signal (S1) zu empfangen, in zwei sekundäre Signale (S21, S22) zu konvertieren und die zwei sekundären Signale (S21, S22) auszugeben, und mit einer Auswerteeinheit (130), die dazu eingerichtet ist, die zwei vom Messwandler (120) ausgegebene sekundären Signalen (S21, S22) zu empfangen und daraus wenigstens eine von dem Fluss des Mediums (M) abhängige Größe (m, K) zu bestimmen, sowie ein entsprechendes Verfahren und eine Verwendung des Systems (100).

## Beschreibung

Die Erfindung betrifft ein System und ein Verfahren zum Ermitteln einer von einem Fluss eines Mediums wie Wasserstoff abhängigen Größe sowie eine Verwendung eines solchen Systems.

### Hintergrund

An Wasserstofftankstellen kann Wasserstoff für z.B. mittels Wasserstoff angetriebene Fahrzeuge erhalten werden. Der Wasserstoff kann dort z.B. mittels einer Betankungsanlage bereitgestellt werden. Wie auch bei anderen Tankstellen für z.B. Erdgas, Benzin oder Diesel sollte dabei die abgegebene Menge an Wasserstoff möglichst genau ermittelt werden, insbesondere auch, um die Kosten bzw. den Preis für den abgegebenen Wasserstoff ermitteln zu können.

Messsysteme für die Ermittlung abgegebener Mengen an Wasserstoff können dabei den Massen- oder Volumenstrom des Wasserstoffs (durch eine Abgabeleitung) erfassen, um so über die Zeitdauer die Menge, insbesondere die absolute Menge, zu ermitteln. Solche Messsysteme müssen - insbesondere bei Verwendung an Tankstellen - in der Regel geeicht werden. Dies bedeutet, dass die mittels des Messsystems ermittelte Menge an abgegebenem Wasserstoff um höchstens einen vorgegebenen Wert (meist relativ angegeben) von der tatsächlich abgegebenen Menge abweichen darf. Die ermittelte Menge bzw. deren Kosten sollten dann auch nicht manipuliert werden können.

Vor diesem Hintergrund stellt sich die Aufgabe, eine Möglichkeit bereitzustellen, einen Fluss für ein Medium wie Wasserstoff bzw. eine davon abhängigen Größe möglichst genau zu ermitteln und/oder manipulationssicher weiterzuverarbeiten.

### Offenbarung der Erfindung

Diese Aufgabe wird durch ein System und ein Verfahren zum Ermitteln einer von einem Fluss eines Mediums abhängigen Größe sowie eine Verwendung des Systems mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit einem System zum Ermitteln einer von einem Fluss eines Mediums, insbesondere von Wasserstoff, abhängigen Größe. Bei dem Fluss kann es sich insbesondere um einen Massen- oder Volumenstrom des Mediums handeln. Grundsätzlich funktioniert ein solches System oder Messsystem aber auch mit anderen Medien, seien es flüssige oder gasförmige Medien. Das System weist hierbei einen Durchflussmesser, bevorzugt einen Coriolis-Massendurchflussmesser, auf, der dazu eingerichtet ist, ein primäres Signal in Abhängigkeit von einem aktuellen Fluss des Mediums auszugeben, das durch den Durchflussmesser hindurchgeführt wird. Im Falle eines Coriolis-Massendurchflussmessers handelt es sich bei dem ermittelten Fluss um einen Massenstrom.

Ein Coriolis-Massendurchflussmesser nutzt den Coriolis-Effekt bzw. die Coriolis-Kraft aus, um den Massenstrom zu bestimmen. Hierzu wird das Medium z.B. durch ein Rohr geleitet, das z.B. mittels geeigneter Aktoren zum Schwingen mit einer festen Frequenz (typischerweise eine Sinusschwingung) angeregt wird. Wenn das Medium durch dieses Rohr fließt, bewirkt das Massenströmungsmoment eine Änderung der Rohrschwingung. Das Rohr dreht sich, was zu einer Phasenverschiebung führt. Diese Phasenverschiebung kann gemessen und eine lineare Ausgabe - z.B. als ein Signal, insbesondere das vorstehend erwähnte, primäre Signal - proportional zur Strömung abgeleitet werden. Es kann damit direkt von der Phasenverschiebung der Schwingung auf den Massendurchfluss bzw. den Massenstrom geschlossen werden. Es versteht sich, dass dabei die Geometrie des Rohres, insbesondere dessen Querschnitt, hierbei berücksichtigt werden muss. Ein hierfür geeigneter Coriolis-Massendurchflussmesser ist z.B. der RHM 04L von Rheonik. Generell kommen aber auch andere Durchflussmesser in Betracht, z.B. solche, die den Massen- oder Volumenstrom oder eine Menge, Masse oder Volumen pro Zeiteinheit gravimetrisch oder volumetrisch messen. Ein Beispiel hierfür wäre der TRICOR Coriolis-Massendurchflussmesser von Küppers Elektromechanik.

Zudem weist das System einen Messwandler auf, der dazu eingerichtet ist, das vom Durchflussmesser ausgegebene primäre Signal zu empfangen, dieses primäre Signal dann in zwei sekundäre Signale zu konvertieren und die zwei sekundären Signale auszugeben. Bei diesen sekundären Signalen kann es sich insbesondere um digitale Signale oder um Impulssignale handeln, denkbar sind aber auch analoge Signale. Zweckmäßigerweise sind diese beiden sekundären Signale zueinander um 90° phasenverschoben, z.B. kann eines der Signale eine positive bzw. ansteigende Flanke darstellen, das andere Signal eine negative bzw. abfallende Flanke. Insbesondere in Bezug auf die nachstehend noch erwähnte Auswerteeinheit kann es relevant sein, dass eines der beiden sekundären Signale gegenüber dem anderen um 90° (das kann positiv oder negativ sein) phasenverschoben ist. Dabei kann eines der beiden sekundären Signale als Referenzsignal (auf das sich der Phasenversatz bezieht) definierten werden (dies kann dann z.B. in einem Konfigurationsprotokoll des Messwandlers festgelegt werden). Der Messwandler kann z.B. derart eingerichtet sein, dass ein Impulssignal einer vorgegebenen Menge bzw. Masse an durch den Coriolis-Massendurchflussmesser geflossenem Medium entspricht. Diese Impulssignale können z.B. aufaddiert bzw. kumuliert werden, um die insgesamt innerhalb eines bestimmten Zeitraumes abgegebenen Masse zu erhalten. Die beiden sekundären Signale sind dabei insbesondere redundant. Ein geeigneter Messwandler ist z.B. der RHE 27 von Rheonik. Dies kann z.B. auch problemlos zusammen mit dem RHM 04L Coriolis-Massendurchflussmesser verwendet bzw. kombiniert werden.

Weiterhin weist das System eine Auswerteeinheit auf, die dazu eingerichtet ist, die zwei vom Messwandler ausgegebenen sekundären Signale zu empfangen und daraus wenigstens eine von dem Fluss (oder Massen- oder Volumenstrom) des Mediums abhängige Größe zu bestimmen. Die Auswerteeinheit umfasst damit insbesondere auch geeignete Schnittstellen sowie Rechenmittel und ggf. Speichermitteln. Bei einer solchen vom Fluss des Mediums abhängigen Größe kann es sich z.B. um die Masse oder das Volumen des Mediums, die bzw. das während eines vorgegebenen Zeitraums durch den Durchflussmesser geflossen ist, handeln, oder auch um die Kosten bzw. den Preis für diese Masse, diese Menge oder dieses Volumen an Medium, die ein Kunde z.B. zu bezahlen hat, nachdem ein Tankvorgang (mit z.B. Wasserstoff als Medium) abgeschlossen ist. Bei der Auswerteeinheit kann es sich z.B. um einen Rechner (z.B. auch einen sog. Zapfsäulenrechner) handeln, der die zwei sekundären Signale entsprechend verarbeiten kann. Eine geeignete Auswerteeinheit ist z.B. ein WWC-Rechner oder ein TQC-Rechner von Tokheim sein. Ein solcher Rechner ist insbesondere dazu geeignet, die zwei sekundären Signale (hier kommt dann insbesondere der Phasenversatz zum Tragen) zu verarbeiten; dabei kommt außerdem zum Tragen, dass z.B. bei Verlust eines der beiden sekundären Signale ein Fehler erzeugt wird, sodass insbesondere nur bei Vorhandensein beider sekundärer Signale eine Bestimmung der Größe in der Auswerteeinheit erfolgt. Dies gewährleistet eine bessere Ausfallsicherheit.

Durch die Verwendung eines solch speziellen Messwandlers ist es möglich, ein besonders genaues Signal direkt an die Auswerteeinheit zu geben, eine Zwischenschaltung einer speicherprogrammierbaren Steuerung (sog. SPS), die ein von einem Messwandler ausgegebenen (insbesondere einzelnes) analoges Signal moduliert bzw. verarbeitet, um der Auswerteeinheit ein geeignetes Signal zur Verfügung stellen zu können, ist nicht mehr nötig. Neben der Gefahr der Manipulation einer SPS ist ein besonderer Nachteil - der nun behoben wird -, dass ein analoges Signal eines Messwandlers typischerweise nicht genau genug für die Zwecke einer Betankungsanlage, insbesondere bei Wasserstoff als Medium ist.

Die Auswerteeinheit kann zudem ein Display oder anderes Anzeigemittel aufweisen oder mit einem solchen verbunden sein. Dieses Anzeigemittel ist dann zweckmäßigerweise dazu eingerichtet, eine Information über den Fluss des Mediums und/oder die wenigstens eine von dem Fluss des Mediums abhängige Größe anzuzeigen. Es kann darauf also z.B. der Preis der abgegebenen Menge bzw. Masse an Wasserstoff (oder eines andere Mediums) angezeigt werden.

Eine besonders bevorzugte Verwendung des vorgeschlagenen Systems ist zum Ermitteln der vom Fluss von Wasserstoff als Medium abhängigen Größe und zwar insbesondere wenn das System bei einer Wasserstoff-Betankungsanlage zum Ermitteln einer im Rahmen eines Tankvorgangs abgeführten Menge oder eines Volumens an Wasserstoff und/oder dessen Kosten verwendet wird. In diesem Zusammenhang ist es z.B. auch zweckmäßig, wenn an die Auswerteeinheit noch ein Kartenlesegerät (für Zahlungen) und/oder Drucker (für die Ausgabe von Belegen) angeschlossen ist.

Die Erfindung betrifft außerdem ein Verfahren zum Ermitteln einer von einem Fluss eines Mediums wie Wasserstoff abhängigen Größe unter Verwendung eines Durchflussmessers, insbesondere eines Coriolis-Massendurchflussmessers, von dem ein primäres Signal in Abhängigkeit von einem aktuellen Fluss des Mediums, das durch den Massendurchflussmesser hindurchfließt, ausgegeben wird, bei dem das primäre Signal von einem Messwandler empfangen und in zwei sekundäre Signale konvertiert wird. Die zwei sekundären Signale werden vom Messwandler ausgegeben und von einer Auswerteeinheit empfangen, mittels welcher daraus das wenigstens eine von dem Fluss des Mediums abhängige Größe bestimmt wird. Die zwei sekundären Signale sind dabei zweckmäßigerweise um 90° zueinander phasenverschoben, und insbesondere jeweils als Impulssignal ausgebildet. Bei dem Verfahren wird bevorzugt ein erfindungsgemäßes System verwendet. Für weitere Ausgestaltungen und Vorteile des Verfahrens sei auf die vorstehenden Erläuterungen zum System verwiesen, die hier entsprechend gelten.

Ein besonderer Vorteil der Erfindung ist, insbesondere gegenüber bisher verwendeter Signalverarbeitung, dass das Signal des Messwandlers nicht mehr an eine SPS gesendet und anschließend moduliert werden muss, damit die Auswerteeinheit den Fluss bzw. die davon abhängige Größe mittels des Signals korrekt und zuverlässig ermitteln kann. Das Signal kann also direkt über den Messwandler (der das primäre in zwei sekundäre Signale wandeln) an die Auswerteeinheit weitergegeben werden. Dies erlaubt einen signifikanten Kostenvorteil des gesamten Systems aufgrund des Wegfalls der (manipulationssicheren) SPS (die bisher für die Verwendung zusammen mit der Auswerteeinheit benötigt wurde) und der Modulierung des Signals bzw. eines Aufteilens des Signals durch einen Optokoppler. Außerdem kann das System hinsichtlich der Manipulationssicherheit wesentlich besser gegen nicht sachgerechte Fremdeinwirkung geschützt werden. Dies erlaubt wiederum eine bessere Konformitätsbewertung bzgl. der schon erwähnten Eichung bzw. der Eichfähigkeit des Systems. Eine SPS kann weiterhin vorhanden sein und z.B. für eine (restliche) Programmierung der Anlagensteuerung verwendet werden, hierzu muss die SPS aber nicht manipulationssicher ausgeführt sein.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

- Figur 1: zeigt schematisch ein erfindungsgemäßes System in einer bevorzugten Ausführungsform.
- Figur 2: zeigt schematisch eine erfindungsgemäße Verwendung eines Systems in einer bevorzugten Ausführungsform.

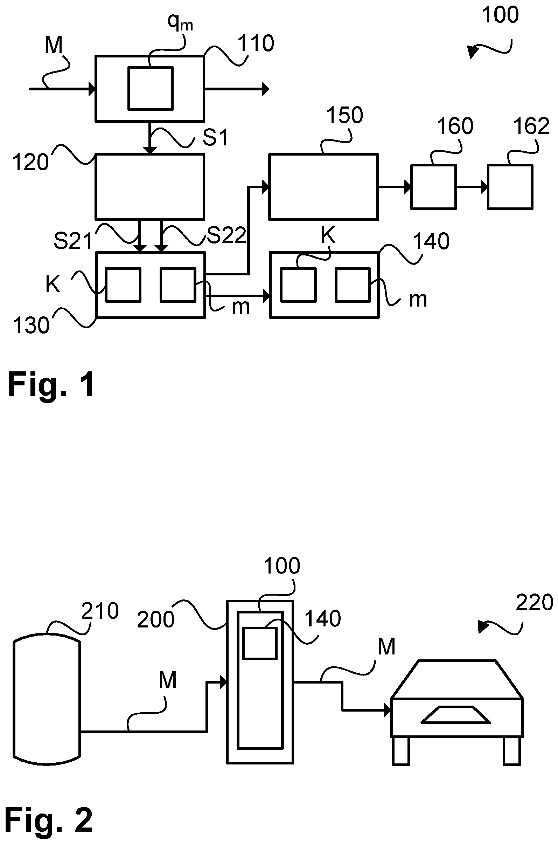

In Figur 1 ist schematisch ein erfindungsgemäßes System 100 - es handelt sich insbesondere um einen Teil einer Betankungsanlage - zum Ermitteln einer von einem Fluss eines Mediums M - hierbei handelt es sich insbesondere um Wasserstoff - abhängigen Größe in einer bevorzugten Ausführungsform dargestellt. Anhand der Figur 1 soll auch das erfindungsgemäße Verfahren erläutert werden.

Das System 100 weist einen hier als Coriolis-Massendurchflussmesser ausgebildeten Durchflussmesser 110 für das Medium M auf. Damit kann ein Massenstrom qₘ oder eine äquivalente Größe bestimmt werden. Von dem Coriolis-Massendurchflussmesser 110 wird dann, typischerweise über eine geeignete Schnittstelle, ein primäres Signal S1 ausgegeben, das von dem aktuellen Durchfluss bzw. Massenstrom qₘ des Mediums M abhängt.

Weiterhin weist das System 100 einen Messwandler 120 auf, der dazu eingerichtet ist, dieses primäre Signal S1 zu empfangen, typischerweise ebenfalls über eine geeignete Schnittstelle. Das primäre Signal S1 wird dann, typischerweise mittels geeigneter Rechenmittel, in zwei sekundäre Signale S21 und S22 konvertiert, die 90° zueinander phasenverschoben sind und als Impulssignale ausgebildet sind. Beispielsweise kann jeder Impuls einer bestimmte Masse bzw. Menge an Medium entsprechen, z.B. 1 g, 5 g oder 10 g Wasserstoff.

Weiterhin weist das System 100 eine Auswerteeinheit 130 auf, die die dazu eingerichtet ist, die zwei vom Messwandler 120 ausgegebenen sekundären Signale S21, S22 zu empfangen und daraus wenigstens eine von dem Fluss bzw. Massenstrom qₘ des Mediums M abhängige Größe zu bestimmen. Beispielhaft werden die Masse m des Mediums sowie dessen Kosten (bzw. dessen Preis) bestimmt. Bei der Masse m handelt es sich z.B. um die seit Beginn eines Betankungsvorgangs durch den Coriolis-Massendurchflussmesser geflossene Menge an Wasserstoff, diese kann beispielsweise durch Aufaddieren der Impulse der sekundären Signale erhalten werden. Die Kosten K (bzw. der Preis) wiederum können aus der Masse m durch Umrechnung bei Berücksichtigung der Kosten pro Masseneinheit des Wasserstoffs (z.B. in Euro/kg, diese Größe kann z.B. in der Auswerteeinheit 130 hinterlegt sein und auch individuell angepasst werden).

Weiterhin weist das das System 100 ein Anzeigemittel 140 auf, das dazu eingerichtet ist, eine oder mehrere der vom Auswerteeinheit 130 ermittelten Größen anzuzeigen, beispielsweise ebenfalls die Masse m sowie die Kosten K (bzw. den Preis). Das Anzeigemittel 140 kann dabei z.B. in die Auswerteeinheit 130 integriert sein bzw. damit in einem gemeinsamen Gehäuse angeordnet sein (es kann sich z.B. um eine direkt auf der Platine verlötete 7-Segment-Anzeige handeln), es kann aber auch über eine geeignete Datenverbindung an die Auswerteeinheit 130 angebunden sein.

Beispielhaft weist das System 100 zusätzlich einen Kartenleser 160 für eine Bezahlung nach dem Tankvorgang und einen Drucker 162 für den Ausdruck und die Ausgabe von Belegen über solche Bezahlungen auf. Diese sind beispielhaft über Datenverbindungen und eine Verrechnungseinheit 150 an die Auswerteeinheit 130 angebunden.

In Figur 2 ist schematisch eine erfindungsgemäße Verwendung des Systems 100 in einer bevorzugten Ausführungsform dargestellt. Das System 100 wird hier bei einer Betankungsanlage 200 verwendet, der Wasserstoff als Medium M aus einem Tank 210 zugeführt wird und über die der Wasserstoff an ein Fahrzeug 220 abgegeben wird. Das System 100 wird hierbei dazu verwendet, den Massenstroms des durchfließenden Wasserstoffs und damit letztlich die abgeführte Masse an Wasserstoff sowie dessen Kosten zu ermitteln. Diese können dann z.B. auf dem Anzeigemittel 140, wie in Bezug auf Figur 1 beschrieben, ausgegeben werden.

## Patentansprüche

1. System (100) zum Ermitteln einer von einem Fluss eines Mediums (M) abhängigen Größe, mit einem Durchflussmesser (110), der dazu eingerichtet ist, ein primäres Signal (S1) in Abhängigkeit von einem aktuellen Durchfluss des Mediums (M), das durch den Durchflussmesser (110) hindurchfließt, auszugeben, mit einem Messwandler (120), der dazu eingerichtet ist, das vom Durchflussmesser (110) ausgegebene primäre Signal (S1) zu empfangen, in zwei sekundäre Signale (S21, S22) zu konvertieren und die zwei sekundären Signale (S21, S22) auszugeben, und mit einer Auswerteeinheit (130), die dazu eingerichtet ist, die zwei vom Messwandler (120) ausgegebenen sekundären Signale (S21, S22) zu empfangen und daraus wenigstens eine von dem Fluss des Mediums (M) abhängige Größe (m, K) zu bestimmen.

2. System (100) nach Anspruch 1, wobei die zwei sekundären Signale (S21, S22) um 90° zueinander phasenverschoben sind.

3. System (100) nach Anspruch 1 oder 2, wobei die zwei sekundären Signale (S21, S22) jeweils als Impulssignal ausgebildet sind.

4. System (100) nach Anspruch 1 oder 2, wobei die zwei sekundären Signale (S21, S22) jeweils als digitales Signal ausgebildet sind.

5. System (100) nach einem der vorstehenden Ansprüche, wobei der Durchflussmesser (110) als Coriolis-Massendurchflussmesser ausgebildet ist.

6. System (100) nach einem der vorstehenden Ansprüche, wobei die wenigstens eine von dem Fluss des Mediums (M) abhängige Größe eine Masse (m) und/oder ein Volumen des Mediums (M), die während eines vorgegebenen Zeitraums durch den Durchflussmesser (110) geflossen ist und/oder von Kosten (K) für diese Masse bzw. dieses Volumen umfasst.

7. System (100) nach einem der vorstehenden Ansprüche, weiterhin mit einem Anzeigemittel (140), das dazu eingerichtet ist, eine Information über den Fluss des Mediums (M) und/oder die wenigstens eine von dem Fluss des Mediums (M) abhängige Größe (m, K) anzuzeigen.

8. System (100, 200) nach einem der vorstehenden Ansprüche, das zum Ermitteln der Größe (m, K) für Wasserstoff als Medium (M) eingerichtet ist.

9. Verwendung eines Systems (100, 200) nach einem der vorstehenden Ansprüche zum Ermitteln der Größe (m, K) für Wasserstoff als Medium (M).

10. Verwendung nach Anspruch 9, bei der das System (100, 200) bei einer Wasserstoff-Betankungsanlage zum Ermitteln einer im Rahmen eines Tankvorgangs abgeführten Menge an Wasserstoff und/oder dessen Kosten verwendet wird.

11. Verfahren zum Ermitteln einer von einem Flusses eines Mediums abhängigen Größe unter Verwendung eines Durchflussmessers (110), von dem ein primäres Signal in Abhängigkeit von einem aktuellen Fluss des Mediums, das durch den Durchflussmesser hindurchfließt, ausgegeben wird, wobei das primäre Signal von einem Messwandler empfangen und in zwei sekundäre Signale konvertiert wird, wobei die zwei sekundären Signale vom Messwandler ausgegeben und von einer Auswerteeinheit empfangen werden, mittels welcher daraus wenigstens eine von dem Fluss des Mediums abhängige Größe bestimmt wird.

12. Verfahren nach Anspruch 11, wobei die zwei sekundären Signale um 90° zueinander phasenverschoben, und insbesondere jeweils als Impulssignal ausgebildet sind.

13. Verfahren nach Anspruch 11 oder 12, bei dem als Durchflussmesser ein Coriolis-Massendurchflussmesser verwendet wird.

14. Verfahren nach einem der Ansprüche 11 bis 13, bei dem ein System nach einem der Ansprüche 1 bis 8 verwendet wird.
